# EUROPEAN PATENT APPLICATION

(11) **EP 1 329 800 A1**
(43) Date of publication of application: **23.07.2003**
(21) Application number: 02354016.4
(22) Date of filing: 22.01.2002
(51) Int. Cl.: G06F 3/06, G06F 9/445, G06F 1/00

(54) **Data storage medium**

(71) Applicant: Hewlett-Packard Company, Palo Alto, CA 94304 (US)
(72) Inventor: Larvoire, Jean François, 38240 Meylan (FR); Yann Stephan, 38130 Echirolles (FR)
(74) Representative: Lloyd, Richard Graham (GB)

(57) **Abstract**

A data storage medium comprising an addressable data storage area and a protected data storage area,
the addressable data storage area comprising a relay partition and a partition table, the partition table comprising a partition entry corresponding to the relay partition,
the protected data storage area comprising a protected partition and a protected partition table, the protected partition table comprising a protected partition entry corresponding to the protected partition,
wherein information corresponding to the protected partition entry is stored in the relay partition.

## Description

### Description of Invention

This invention relates to a data storage medium, a program element operable to read the data storage medium, a system, a method of configuring a data storage medium and a method of reading a data storage medium.

### Background of the Invention

When a computer boots from a hard disk drive, it is necessary for the computer's BIOS to be able to identify a bootable or active partition from which an operating system can be booted. Conventionally, a hard disk may be divided into up to four main partitions. When booting from a hard disk, the BIOS will read a master boot record ("MBR"), conventionally located at the first sector or first logical block address (LBA 0) of the disk. The master boot record contains a table which contains descriptions of the main partitions. One of the main partitions is conventionally marked as active, indicating that it is a "bootable" partition which should be used for booting up. However, where two or more potentially bootable main partitions are provided, for example where two different operating systems are stored in separate partitions, it is known for the BIOS to generate a boot menu enabling a user to select a preferred operating system.

To overcome the limitation to four primary partitions, specifications such as the Intel Extensible Firmware Interface (EFI) specification have been defined. In accordance with the EFI specification, a very large number of partitions may be defined, each identified by a globally unique identifier (GUID), a 128 bit number. A partition table, referred to as a GPT or GUID partition table, lists each of the partitions, including their beginning and end addresses and information identifying the contents or function of the partition where desired. It is possible for an MBR partition table and the (up to) four main partitions to co-exist on the same disk with EFI partitions and a GPT by defining one of the main partitions as a GPT-managed area and locating the GPT partitions in the GPT-managed area. If a BIOS which is not compatible with the EFI specification attempts to boot from the hard disk, it will read the master boot record and bootable main partitions in conventional manner while ignoring the main partition holding the EFI-configured GPT and GPT partitions. The EFI specification is advantageous in that it permits up to 2⁶⁴ sectors of a disk to be addressed.

When configuring a data storage medium, particularly a hard disk drive, it is known to define a "host protected area", for example as specified in the ATA specification versions 4 and later. A host protected area is defined by reporting a disk storage area smaller than the true storage area, and is in general not accessible to an operating system running on a computer to which the hard disk drive is connected. The hard disk drive is effectively divided into two parts, an area which can be read or written to by the operating system, hereinafter referred to as an 'addressable data storage area', and the host protected area. Because the host protected area is defined by reporting a smaller disk storage area, the host protected area is in effect hidden from the operating system.

In accordance with the ATA specification, the hard disk drive firmware is configured such that the read heads of the disk drive cannot physically move into the host protected area to read or write to that area of the disk unless the host protected area is 'unlocked'. Access to the host protected area is permitted if the BIOS instructs the firmware to unlock the area, and optionally, the host protected area can be further protected by a password, such that the BIOS requests a password from a user before instructing the firmware to unlock the host protected area, and/or a write-once lock, such that even if the protected area has been accessed, the data stored there cannot be altered. A host protected area is desirable since it allows a computer manufacturer or supplier to store, for example, diagnostic software or an image of the original installed software such that it cannot be overwritten by a user.

A problem with providing such a host protected area is that there is no straightforward way to identify the data stored in the host protected area. It will be apparent that to identify the contents of the protected area, it is necessary first to access or unlock the protected area using the BIOS such that the contents can be read and scan the protected area. This is time consuming and particularly undesirable during boot-up since the boot process will be extended by the time necessary for the BIOS to unlock the protected area and identify the contents.

Two proposals have been published by the NCITS T13 Committee relating to reading the contents of the protected area. One proposal, T13/D1367, requiring the BIOS to emulate a disk drive, where the contents of the protected area are readable from the 'disk drive'. T13/1407DT proposes that the address of the LBA 0 is offset to the start of the protected area. These proposals however require relatively complex modifications to the BIOS or the controlling firmware with correspondingly limited implementation.

An aim of the invention is to provide a new or improved data storage medium wherein it is possible to identify the contents of a host protected area.

### Summary of the Invention.

According to one aspect of the present invention we provide a data storage medium comprising a addressable data storage area and a protected data storage area,
the addressable data storage area comprising at least one relay partition and a partition table, the partition table comprising a partition entry corresponding to the or each relay partition,
the protected data storage area comprising a protected partition and a protected partition table, the protected partition table comprising a protected partition entry corresponding to the protected partition,
wherein information corresponding to the protected partition entry is stored in the relay partition.

The information corresponding to the protected partition entry stored in the relay partition may comprise a duplicate of the protected partition entry.

The addressable data storage area may comprise a GPT-managed area, the partition table may comprise a GPT associated with the GPT-managed area and the relay partition may be located in the GPT-managed area.

The addressable data storage area may comprise a master boot record and at least one main partition and the GPT-managed area may comprise a main partition.

The addressable data storage area may comprise a backup partition table and the protected data storage area may comprise a protected backup partition table.

The data storage medium may comprise a hard disk drive.

Recovery data may be stored in the the protected data storage area.

According to a second aspect of the invention, we provide a program element operable to read a data storage medium according to the first aspect of the invention, the program element being operable to identify the partition table, and scan the partition table to identify bootable partitions in the addressable data storage area and the protected data storage area.

The program element may be operable to generate a boot menu in accordance with the or each bootable partition identified.

The program element may be operable, if no valid partition table is identified, to access the protected data storage area, and identify the protected partition table.

The program element may be operable to read the master-boot record partition table where present to identify a bootable main partition.

The program element may comprise a BIOS program element.

According to a third aspect of the invention, we provide a system comprising a data storage medium according to the first aspect of the invention and a program element according to the second aspect of the invention.

According to a fourth aspect of the invention we provide a method of configuring a data storage medium comprising the steps of defining a addressable data storage area and a protected data storage area, providing a relay partition and a partition table in the addressable data storage area and providing a partition entry in the partition table corresponding to the relay partition, defining a protected partition and a protected partition table in the protected data storage area, supplying a protected partition entry in the protected partition table corresponding to the protected partition, and storing information corresponding to the protected partition entry in the relay partition.

The method may comprise the step of storing recovery data in the protected data storage area.

According to a fifth aspect of the invention we provide method of reading a data storage medium comprising a addressable data storage area and a protected data storage area, the method comprising the steps of identifying a partition table, scanning the partition table to identify relay partitions in the addressable data storage area and reading the relay partitions to identify partitions in the protected data storage area.

The method may comprise the steps of scanning the partition table to identify bootable partitions in the addressable data storage area and reading the relay partitions to identify bootable partitions in the protected data storage area.

### Brief Description of the Figures

An embodiment of the invention will now be described by way of example only with reference to the accompanying drawings, wherein
Figure 1 is a diagrammatic illustration of a data storage medium embodying the present invention, and
Figure 2 is a flow diagram illustrating a method embodying the present invention.

### Description of the Preferred Embodiment

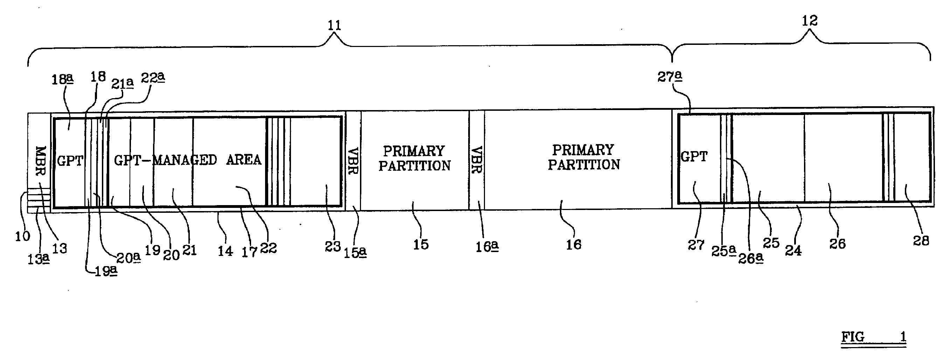

Referring now to Figure 1, a diagrammatic illustration of a data storage area of a data storage medium, in the present example a hard disk drive, is indicated at 10. The data storage area 10 is divided into a addressable data storage area 11 and a protected data storage area 12. The protected data storage area 12 in the present example comprises a host protected area in accordance with the ATA 4 specification and thus is hidden from an operating system of a computer incorporating the data storage medium. The addressable data storage area may be read from and written to by an operating system in conventional manner.

The first sector or logical block of the addressable data storage area 11 comprises a master boot record 13 in conventional manner. The addressable data storage area 11 is further divided in conventional manner into three main partitions 14, 15, 16. In the present example, the main partitions 15, 16 are provided with volume boot records 15a, 16a in conventional manner, indicating that each of the main partitions 15, 16 is a bootable main partition. The master boot record 13 comprises an MBR table 13a comprising an entry corresponding to each main partition 14, 15, 16 including the start address for each main partition 14, 15, 16.

The main partition 14 comprises a GUID partition table managed area 17. A partition table comprising a GUID partition table (GPT) 18 is provided at the start of the GPT managed area 17, comprising a GPT header 18a. The area 17 comprises a plurality of GPT-managed partitions 19, 20, 21, 22, each of which is provided with a corresponding partition entry 19a, 20a, 21a, 22a in the GPT 18. Each partition entry comprises information relating to the corresponding partition, including a partition type GUID, a unique GUID for that partition, the start and end addresses, in the EFI specification comprising logical block addresses, EFI attribute information and a partition name of up to 36 characters. At the end of the GPT managed area 17, a backup GPT 23 is provided in conventional manner, which duplicates the contents of the GPT 18 such that if the GPT 18 is corrupted or invalid, the GPT-managed area 17 may still be addressed using the information in the backup GPT 23.

The protected data storage area 12 also comprises a protected GPT-managed area 24, in the present example comprising two protected partitions 25, 26. The protected GPT managed area 24 comprises a protected GPT 27, comprising a GPT header 27a and two protected partition entries 25a, 26a corresponding to GPT-managed partitions 25, 26 respectively. In like manner to the GPT 18 discussed above, the protected partition entries 25a, 26a comprises information relating to the corresponding protected partition 25, 26 including a partition type GUID, a unique GUID for that partition, the start and end addresses, in the EFI specification comprising logical block addresses, EFI attribute information and a partition name of up to 36 characters. The GPT managed area 24 further comprises a protected backup GPT 28 in like manner to the GPT 23 of the GPT managed area 17.

A partition is defined or allocated in the GPT-managed area 17 corresponding to each protected partition in the protected GPT managed area 24. Such partitions are hereinafter referred to as "relay partitions". In this example, the GPT-managed partitions 19, 20 comprise relay partitions which correspond to protected partitions 25, 26 respectively. Each relay partition 19, 20 stores information which duplicates that held in the protected partition entry 25a, 26a corresponding to the protected partition 25, 26 respectively. Thus, the relay partitions 19, 20 will be relatively short partitions holding the partition type GUID, unique partition GUID, start and end addresses, EFI attribute information and partition names corresponding to the respective protected partition 25, 26. The relay partitions may store any other information as desired, for example a flag indicating that they are relay partitions. Advantageously, the partition type GUID and partition name stored in the partition entries 19a, 20a, will correspond to those stored in the respective partition entry 25a, 26a. A program element, reading the addressable data storage area 11, will thus be able to read information identifying the contents of the protected data storage area 12.

Each relay partition 19, 20 will have its own a corresponding partition entry 19a, 20a in the GPT 18 and backup GPT 23. The partition entries 19a, 20a corresponding to the partitions 19, 20 will thus include the start and end addresses, GUID and partition names of the relay partitions 19, 20. It will thus be possible to read the GPT 18 to identify the relay partitions 19, 20 and read the relay partitions 19, 20 to identify the protected partitions 25, 26 in the protected data storage area 12.

When a computer comprising a data storage medium 10 is booted from the data storage medium 10, conventionally the BIOS will read the MBR 13 and/or identify a valid GPT 18. From the information contained in the MBR 13 and/or GPT 18, the BIOS will be able to identify bootable partitions, whether main partitions 15, 16 or selected partitions in the GPT-managed area 17. The BIOS will conventionally not be able to read the protected data storage area 12 for example because the firmware controlling the data storage medium 10 has been set to prevent access to that area 12, but will be able to obtain information on the content of the protected partitions 25, 26 from the relay partitions 19, 20.

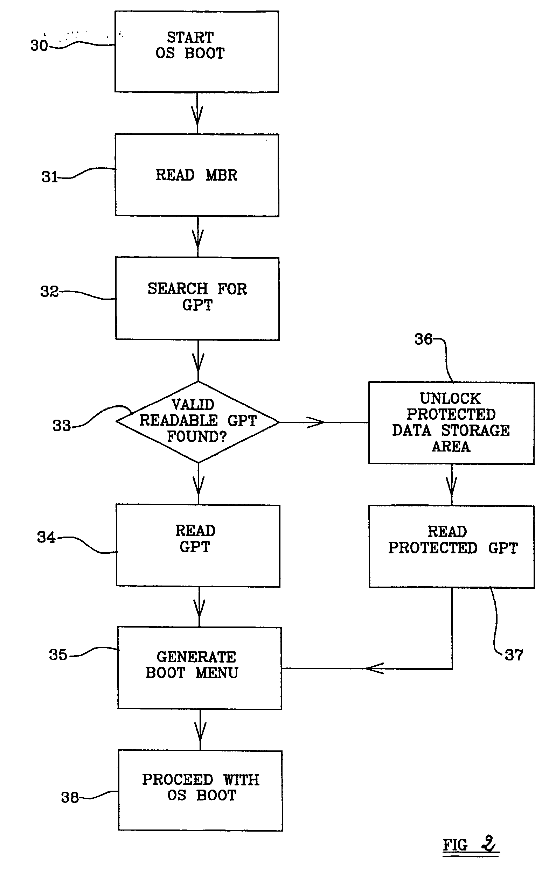

Thus, in the present example a BIOS performing an operating system boot will follow a method as shown in Figure 2. At step 30, the BIOS starts the operating system boot, in conventional manner. At step 31 the BIOS reads the MBR at sector 1 or LBA 0 and identifies bootable main partitions listed in the MBR. The BIOS will then search for a readable GPT, in this example the GPT 18, at step 32 and check the validity of the GPT at step 33. If a valid readable GPT is found, at step 34 the BIOS likewise scans the GPT to identify any bootable partition in the GPT managed area 17. Where either of the protected partitions 26, 27 comprise a bootable partition, this will be apparent from the duplicate information held in the corresponding relay partition 19, 20, or even from the respective partition entry 19a, 20a. At step 35 the BIOS generates a boot menu in accordance with the identified boot partitions.

If no readable valid GPT is identified, then at step 36 the BIOS unlocks the protected area 12, and at step 37 reads the protected GPT 27. The BIOS can then generate a boot menu as shown at step 35. It will be apparent that where no MBR is present, the method may start at step 32, to try and identify a valid readable GPT. Alternatively, an option ROM may be set so that the BIOS does not read an MBR even if one is present.

Although the method as set out in Figure 2 is described as being performed by a BIOS, it may be performed instead by a boot program element located on the disk itself. Such a program could be used with any computer, without requiring that the BIOS be operable as set out in Figure 2.

Where a data storage medium is provided in accordance with the present invention, a boot menu may established listing all bootable partitions, including primary partitions, GPT-managed partitions and partitions held in the host protected area. The protected data storage area need not be physically scanned at every boot, and the BIOS or, following boot-up, any management or other software will be able to identify what is contained in the protected data storage area without having to "unlock" it.

Further, the data stored in the protected data storage area will be resistant to catastrophic software failures, such as erasure of the hard disk whether malicious or accidental or even intentional. If the contents of the addressable data storage area 11 have been deleted, corrupted or otherwise rendered invalid, the BIOS will still be able to boot by unlocking and reading the GPT in the protected data storage area 12 and booting accordingly.

Advantageously, recovery data may be stored in the protected data storage area 12 . By recovery data is meant any data or programs for providing backup, diagnostic or recovery capabilities. Thus, recovery data may include, but is not limited to, an image of the contents of the addressable data storage area, in particular of the original installed software, programs necessary to perform a system boot, diagnostic utilities and any other programs or software as desired. By providing recovery data in the protected data storage area 12 the reliability of the recovery data can be assured since the protected data storage area is protected from tampering and provides a reliable boot if needed as discussed above. Further, a supplier may not need to supply a separate recovery disk or CD-ROM or other storage device.

Although the invention has been described herein with reference to a data storage medium provided with an MBR and a GPT-managed area, it will be apparent that the invention may be used with a data storage medium entirely or primarily managed using a GPT, or indeed using a protocol which permits a sufficiently large number of partitions to be defined to provide the required number of relay partitions.

The invention may be implemented using any appropriate addressing or file management system and on any desired data storage medium and is not limited to any particular specification or implementation as described herein. In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A data storage medium (10) comprising a addressable data storage area (11) and a protected data storage area (12),
the addressable data storage area (11) comprising at least one relay partition (19, 20) and a partition table (18), the partition table (18) comprising a relay partition entry (19a), (20a) corresponding to the or each relay partition (19, 20),
the protected data storage area (12) comprising a protected partition (25, 26) and a protected partition table (27), the protected partition table (27) comprising a protected partition entry (25a, 26a) corresponding to the protected partition,
wherein information corresponding to the protected partition entry (25a, 26a) is stored in the relay partition (19, 20).

2. A data storage medium (10) according to claim 1 wherein the information corresponding to the protected partition entry (25a, 26a) stored in the relay partition (19, 20) comprises a duplicate of the protected partition entry (25a, 26a).

3. A data storage medium (10) according to claim 1 or claim 2 wherein the addressable data storage area (11) comprises a GPT-managed area (17), the partition table (18) comprising a GPT associated with the GPT-managed area and wherein the relay partition (25, 26) is located in the GPT-managed area (17).

4. A data storage medium according to claim 3 wherein the addressable data storage area (10) comprises a master boot record (13) and at least one main partition (14, 15, 16) and wherein the GPT-managed area (17) comprises a main partition (14).

5. A data storage medium (10) according to any one of claims 1 to 4 wherein the addressable data storage area (11) comprises a backup partition table (23) and wherein the protected data storage area comprises a protected backup partition table (28).

6. A data storage medium (10) according to any one of claims 1 to 5 comprising a hard disk drive.

7. A data storage medium (10) according to any one of claims 1 to 6 wherein recovery data is stored in the the protected data storage area (12)

8. A program element operable to read a data storage medium (10) according to any one of the preceding claims, the program element being operable to identify the partition table (18), and scan the partition table (18) to identify bootable partitions in the addressable data storage area (11) and the protected data storage area (12).

9. A program element according to claim 8 operable to generate a boot menu in accordance with the or each bootable partition identified.

10. A program element according to claim 8 or claim 9 operable, if no valid partition table is identified, to access the protected data storage area, and identify the protected partition table.

11. A program element according to any one of claims 8 to 10 where dependent directly or indirectly on claim 4 operable to read the master boot record partition table to identify a bootable main partition.

12. A program element according to any one of claims 8 to 11 comprising a BIOS program element.

13. A system comprising a data storage medium according to any one of Claims 1 to 7 and a program element according to any one of Claims 8 to 12.

14. A method of configuring a data storage medium (10) comprising the steps of defining a addressable data storage area (11) and a protected data storage area (12), providing a relay partition (19, 20) and a partition table (18) in the addressable data storage area (13) and providing a partition entry (19a, 20a) in the partition table (18) corresponding to the relay partition (19, 20), defining a protected partition (25, 26) and a protected partition table (27) in the protected data storage area (12), supplying a protected partition entry (25a, 26a) in the protected partition table corresponding to the protected partition (25, 26), and storing information corresponding to the protected partition entry (25a, 26a) in the relay partition (19, 20).

15. A method of configuring a data storage medium (10) according to claim 14 comprising the step of storing recovery data in the protected data storage area (12).

16. A method of reading a data storage medium (10) comprising a addressable data storage area (11) and a protected data storage area (12), the method comprising the steps of identifying a partition table (18), scanning the partition table (18) to identify relay partitions in the addressable data storage area (11) and reading the relay partitions (19, 20) to identify partitions in the protected data storage area (12).

17. A method of reading a data storage medium (10) according to claim 16 comprising the steps of scanning the partition table (18) to identify bootable partitions in the addressable data storage area (11) and reading the relay partitions (19, 20) to identify bootable partitions in the protected data storage area (12).
